**Europäisches Patentamt**

**(19)** **European Patent Office**

**Office européen des brevets**

**(11)** Publication number : **0 420 513 B1**

**(12)** EUROPEAN PATENT SPECIFICATION

**(45)** Date of publication of patent specification : **04.01.95 Bulletin 95/01**

**(51)** Int. Cl.$^6$ : **H01Q 17/00, C08K 3/34**

**(21)** Application number : **90310336.4**

**(22)** Date of filing : **21.09.90**

**(54)** Microwave-absorbing material.

**(30)** Priority : **29.09.89 BE 8901043**

**(43)** Date of publication of application : **03.04.91 Bulletin 91/14**

**(45)** Publication of the grant of the patent : **04.01.95 Bulletin 95/01**

**(84)** Designated Contracting States : **AT BE CH DE DK ES FR GB GR IT LI LU NL SE**

**(56)** References cited :
EP-A- 0 306 311
DE-A- 2 026 890
DE-A- 3 329 264
GB-A- 2 117 569

**(73)** Proprietor : **GRACE N.V.**
**Nijverheidsstraat 7**
**B-2431 Westerlo (BE)**

**(72)** Inventor : **Timmerman, August T.**
**Boerenkrijglaan 77**
**B-3180 Westerlo (BE)**

**(74)** Representative : **Barlow, Roy James et al**
**J.A. KEMP & CO.**
**14, South Square**
**Gray's Inn**
**London WC1R 5LX (GB)**

## Description

The present invention relates to a material capable of absorbing microwave radiation.

It is known to provide materials which are capable of absorbing microwave radiation, for application in various fields. For example, such materials are advantageous for lining the nacelles surrounding a microwave antenna such as an airborne radar antenna, or for attaching to the exterior of the structure such as the masts or superstructure of vessels such as ships in order to reduce reflections and echoes experienced by a nearby antenna.

Traditional microwave absorbers include iron titanium dioxide and carbon black, and it is also possible to incorporate these materials in a rubber-based absorber.

The prior art microwave absorbers have the disadvantage of deteriorating upon exposure to the elements, for example when used on the external surfaces of ships. In particular the iron content of these absorbers is subject to oxidation.

DE-A-3329264 discloses a microwave absorbing material having as active constituent at least one active material chosen from the group comprising graphite, electrically conductive lamp black, silicon carbide and electrically conductive polyacetylene. Furthermore, it is indicated that the microwave absorbent material may additionally include at least one inactive (inert) filler, for example titanium dioxide, aluminium oxide, talc, silicates and barium sulphate.

EP-A1-0306311 discloses an electromagnetic wave absorbing material which uses silicon carbide in fibrous form as the active constituent. There is also in this document disclosure of "an amorphous substance composed of silicon, titanium, carbon and oxygen".

It is an aim of the present invention to provide microwave-absorbing material having better weathering capabilities than the prior art materials.

The present invention is characterised by the features of claim 1 whose preamble is based on the disclosure of DE-A-3329264.

In order that the present invention may more readily be understood the following description is given, merely by way of example, with reference to the accompanying drawing and to the following Examples of tested compositions falling within the scope of the present invention. The sole Figure shown on the accompanying drawing is a plot of the reflectivity against frequency obtained with the products described in Examples 1 and 2.

Generally, the novelty of the microwave absorber in accordance with the present invention resides in the use of pulverulent carborundum, possibly in combination with other pigments to render the carrier material absorptive of microwave radiation.

The variation of the peak attenuation frequency can be achieved by changing the amount and the proportions of the various microwave-absorbing pigments in the composition and by changing the thickness of a layer of the material. For example, increasing the proportion of carrier material, all other factors being equal, has the effect of reducing the peak attenuation frequency.

## EXAMPLE 1

A microwave-absorbing material was made from silicone rubber, carborundum (SiC) powder, titanium dioxide ($TiO_2$) and carbon black in the ratios:-

| | |
|---|---|
| Silicone rubber | 52.8 vol.% |
| Cross-linking agent | 2.2 vol.% |
| $TiO_2$ | 4.1 vol.% |
| SiC | 40.9.% |

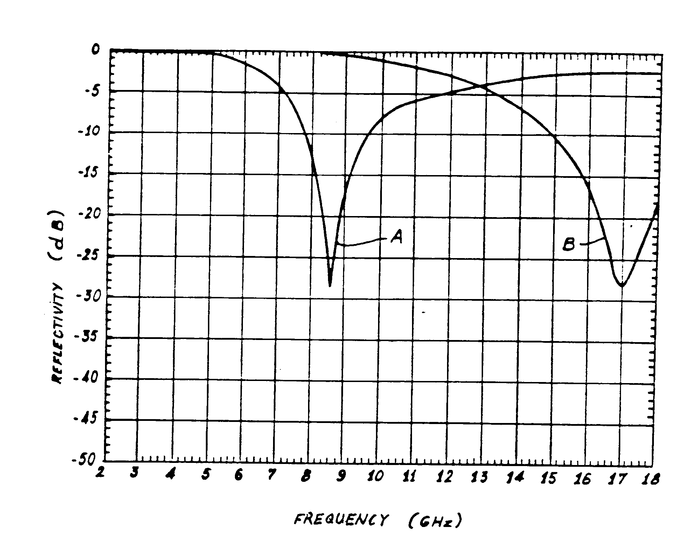

The pigments (SiC and $TiO_2$ and the cross-linking agent) were added to the silicone rubber liquid pre-polymer and mixed thoroughly, after which the blend was calendered to give a sheet having a thickness of 2.09 mm. The density of the sheet was 2.04 g/cm³. The results of reflectivity in decibels of the 2.09 mm sheet tested at various frequencies in GHz are plotted at A on the accompanying Figure 1. As can be seen, the mixture provides a peak attenuation frequency of 8.6 GHz.

## EXAMPLE 2

The process of Example 1 was repeated but this time with the following constituents (all the pigments having been added to the silicone rubber liquid pre-polymer before mixing commenced):-

| | |
|---|---|
| Silicone rubber | 57.2 vol.% |
| Cross-linking agent | 2.3 vol.% |

| Carbon black | 0.4 vol.% |
|---|---|
| TiO$_2$ | 4.0 vol.% |
| SiC | 36.1 vol.% |

The sheet thickness was 1.18 mm and the density was found to be 1.93 g/cm$^3$.

The frequency response is plotted at B on the accompanying Figure and from this it can be seen that there is a peak attenuation at a frequency of 17 GHz.

In addition to the chemical cross-linking agent listed in the table of constituents in Examples 1 and 2, a catalyst will also be present in small quantities to enhance cross-linking.

Generally we prefer that the volume percentage of carborundum be of the order of ten times the volume percentage of titanium dioxide, and where carbon black is present this is preferably up to one tenth of the volume percentage of titanium dioxide.

By testing of various different formulations and sheet thicknesses other than those given above, we have found that it is possible to achieve peak attenuation frequencies of from 3 to 17 GHz and we do not expect that these are the limits of the available frequency spectrum.

Likewise, we have been able to achieve with many results a peak attenuation (negative reflectivity) of 20 decibels, and with certain compositions such as those preferred compositions in Examples 1 and 2 we have been able to demonstrate attenuation levels of the order of 27 to 28 decibels.

Generally our results show that the volume percentage of the four main constituents can be in the following ranges:-

| Rubber | 62-44 vol % |
|---|---|
| SiC | 35-50 vol % |
| TiO$_2$ | 3-5 vol % |
| Carbon Black | 0-1 vol % |

Although Examples 1 and 2 both use silicone rubber of the addition type, any other polymer, preferably elastomeric, may be chosen, and in particular we find that nitrile rubber and polyurethane are particularly convenient for providing cross-linked rubber sheets with resonant microwave absorption characteristics.

The invention also extends to other carrier materials such as a liquid which sets on exposure to air or on heating and acts as a paint.

With the general compositions in the ranges shown above, the electromagnetic properties of the materials are as follows:-

| real part of dielectric permittivity | : | $\epsilon = 19$ to $27$ |
|---|---|---|
| real part of magnetic permeability | : | $\mu = 1$ |
| imaginary part of dielectric permittivity | : | $\epsilon * = -4$ to $-6.5$ |
| imaginary part of magnetic permeability | : | $\mu * = 0$ |

The elastomeric absorbing sheets made in accordance with Examples 1 and 2 have been tested under simulated adverse climatic conditions (for example sprayed with water and frozen to -40°C, and at temperatures of +40°C and a relative humidity of 90%) and been found to have the same frequency responses and to be capable of withstanding the effects of climatic aging.

Preferably the range of mesh sizes for the carborundum powder used as the pigment in accordance with the present invention is from 45μm to 6μm, more preferably from 30μm to 9μm.

Where the microwave-absorbing material in accordance with the present invention is in sheet form, the preferred range of thicknesses for the sheet is from 1 to 5 mm, and the most preferred range is from 1.35 to 2 mm.

The invention also provides a microwave-absorbing material bonded to the structure of a vessel for eliminating microwave reflections from a nearby antenna, the material having a narrow band resonant frequency of absorption with the median frequency of said narrow band substantially equal to the frequency of microwave transmission by the antenna.

## Claims

1. A microwave-absorbing material comprising a carrier with microwave-absorbing pigments therein, wherein one of the microwave-absorbing pigments is carborundum and another is titanium oxide; characterised in that the composition comprises from 62 to 44 vol.% of carrier, from 35 to 50 vol.% of carborundum powder, from 3 to 5 vol.% of titanium dioxide, and from 0 to 1 vol.% of carbon black.

2. A microwave-absorbing material according to claim 1, and further characterised by including carbon black as a microwave-absorbing pigment.

3. A microwave absorbent material according to claim 1 or 2, characterised in that it has the following composition:-

   | | |
   |---|---|
   | Silicone rubber | 52.8 vol.% |
   | Cross-linking agent | 2.2 vol.% |
   | $TiO_2$ | 4.1 vol.% |
   | SiC | 40.9 vol.%. |

4. A microwave absorbing material according to claim 1 or 2, characterised in that it has the following composition:-

   | | |
   |---|---|
   | Silicone rubber | 57.2 vol.% |
   | Cross-linking agent | 2.3 vol.% |
   | Carbon black | 0.4 vol.% |
   | $TiO_2$ | 4.0 vol.% |
   | SiC | 36.1 vol.%. |

5. A microwave-absorbing material according to any one of the preceding claims, characterised in that the mesh size of the pulverulent carborundum is from 45$\mu$m to 6$\mu$m.

6. A microwave-absorbing material according to any one of the preceding claims characterised in that the carrier is an elastomer, preferably natural rubber, silicone rubber, or nitrile rubber, or polyurethane.

7. A microwave-absorbing material according to any one of the preceding claims, characterised by being in the form of a sheet of calendered material, preferably having a thickness of from 1 to 5 mm.

8. A microwave-absorbing material according to any one of claims 1 to 5, characterised in that the carrier is a liquid capable of setting on exposure to air or heat.

9. A microwave-absorbing material according to either of claims 2 and 8, characterised by being bonded to the structure of a vessel for eliminating microwave reflections from a nearby antenna, the material having a narrow band resonant frequency of absorption with the median frequency of said narrow band substantially equal to the frequency of microwave transmission by said antenna.


## Patentansprüche

1. Mikrowellen absorbierendes Material, das einen Träger mit darin befindlichen Mikrowellen absorbierenden Pigmenten umfaßt, wobei eines der Mikrowellen absorbierenden Pigmente Carborundum und ein weiteres Titandioxid ist, dadurch gekennzeichnet, daß die Zusammensetzung 62 bis 44 Vol.% Träger, 35 bis 50 Vol.% Carborundumpulver, 3 bis 5 Vol.% Titandioxid und 0 bis 1 Vol.% Ruß umfaßt.

2. Mikrowellen absorbierendes Material nach Anspruch 1, das außerdem dadurch gekennzeichnet ist, daß es Ruß als Mikrowellen absorbierendes Pigment einschließt.

3. Mikrowellen absorbierendes Material nach Anspruch 1 oder 2, dadurch gekennzeichnet, daß es die folgende Zusammensetzung aufweist:

   | | |
   |---|---|
   | Siliconkautschuk | 52,8 Vol.% |
   | Vernetzungsmittel | 2,2 Vol.% |
   | $TiO_2$ | 4,1 Vol.% |
   | SiC | 40,9 Vol.% |

4.  Mikrowellen absorbierendes Material nach Anspruch 1 oder 2, dadurch gekennzeichnet, daß es die folgende Zusammensetzung aufweist:

| | |
|---|---|
| Siliconkautschuk | 57,2 Vol.% |
| Vernetzungsmittel | 2,3 Vol.% |
| Ruß | 0,4 Vol.% |
| $TiO_2$ | 4,0 Vol.% |
| SiC | 36,1 Vol.% |

5.  Mikrowellen absorbierendes Material nach einem der vorhergehenden Ansprüche, dadurch gekennzeichnet, daß die Maschengröße des pulverigen Carborundum 45 μm bis 6 μm beträgt.

6.  Mikrowellen absorbierendes Material nach einem der vorhergehenden Ansprüche, dadurch gekennzeichnet, daß der Träger ein Elastomer, vorzugsweise Naturkautschuk, Siliconkautschuk oder Nitrilkautschuk oder polyurethan ist.

7.  Mikrowellen absorbierendes Material nach einem der vorhergehenden Ansprüche, dadurch gekennzeichnet, daß es in Form einer Folie aus kalandriertem Material vorzugsweise mit einer Dicke von 1 bis 5 mm vorliegt.

8.  Mikrowellen absorbierendes Material nach einem der Ansprüche 1 bis 5, dadurch gekennzeichnet, daß der Träger eine Flüssigkeit ist, die härten kann, wenn sie Luft oder Wärme ausgesetzt wird.

9.  Mikrowellen absorbierendes Material nach einem der Ansprüche 2 oder 8, dadurch gekennzeichnet, daß es an die Struktur eines Wasserfahrzeugs gebunden ist, um Mikrowellenreflektionen von einer nahegelegenen Antenne zu eliminieren, wobei das Material eine schmalbandige Resonanzfrequenz der Absorption aufweist, wobei die Medianfrequenz des schmalen Bandes im wesentlichen gleich der Frequenz der Mikrowellenaussendung durch die Antenne ist.


## Revendications

1.  Matériau absorbant les micro-ondes comprenant un support contenant des pigments amortissant les micro-ondes, où l'un des pigments amortissant les micro-ondes est du carborundum et un autre est de l'oxyde de titane ; caractérisé en ce que la composition comprend 62 à 44 % en vol. du support, 35 à 50 % en vol. de poudre de carborundum, 3 à 5 % en vol. de bioxyde de titane et 0 à 1 % en vol. de noir de carbone.

2.  Matériau absorbant les micro-ondes selon la revendication 1, caractérisé de plus en ce qu'il contient du noir de carbone en tant que pigment amortissant les micro-ondes.

3.  Matériau absorbant les micro-ondes selon la revendication 1 ou 2, caractérisé en ce qu'il a la composition suivante :

| | |
|---|---|
| Caoutchouc de silicone | 52,8 % vol. |
| Agent réticulant | 2,2 % vol. |
| $TiO_2$ | 4,1 % vol. |
| SiC | 40,9 % vol. |

4.  Matériau absorbant les micro-ondes selon la revendication 1 ou 2, caractérisé en ce qu'il a la composition suivante :

| | |
|---|---|
| Caoutchouc de silicone | 57,2 % vol. |
| Agent réticulant | 2,3 % vol. |
| Noir de carbone | 0,4 % vol. |
| $TiO_2$ | 4,0 % vol. |
| SiC | 36,1 % vol. |

5.  Matériau absorbant les micro-ondes selon l'une quelconque des revendications précédentes, caractérisé en ce que la grandeur de maille du carborundum pulvérulent est de 45μm à 6μm.

6.  Matériau absorbant les micro-ondes selon l'une quelconque des revendications précédentes, caractérisé en ce que le support est un élastomère, de préférence du caoutchouc naturel, du caoutchouc de silicone, ou du caoutchouc de nitrile ou du polyuréthane.

7. Matériau absorbant les micro-ondes selon l'une quelconque des revendications précédentes, caractérisé en ce qu'il a la forme d'une feuille d'un matériau calandré, de préférence ayant une épaisseur de 1 à 5 mm.

8. Matériau absorbant les micro-ondes selon l'une quelconque des revendications 1 à 5, caractérisé en ce que le support est un liquide pouvant durcir lors d'une exposition à l'air ou à la chaleur.

9. Matériau absorbant les micro-ondes selon l'une des revendications 2 et 8, caractérisé en ce qu'il est lié à la structure d'un vaisseau pour éliminer les réflexions de micro-ondes d'une antenne proche, le matériau ayant une fréquence résonante d'amortissement sur bande étroite dont la fréquence moyenne de ladite bande étroite est sensiblement égale à la fréquence de la transmission des micro-ondes par ladite antenne.